(19) Europäisches Patentamt
European Patent Office
Office européen des brevets

(11) Veröffentlichungsnummer: **0 003 821**
**B1**

# (12) EUROPÄISCHE PATENTSCHRIFT

(45) Veröffentlichungstag der Patentschrift: **24.03.82**

(51) Int. Cl.³: **F 15 D 1/00**, F 17 D 1/16, C 08 F 120/56

(21) Anmeldenummer: **79100485.6**

(22) Anmeldetag: **20.02.79**

(54) **Verfahren zur Verringerung des Reibungsdruckverlustes von turbulent oder pulsierend strömenden wässrigen Flüssigkeiten und Suspensionen.**

(30) Priorität: **23.02.78 DE 2807709**

(43) Veröffentlichungstag der Anmeldung: **05.09.79 Patentblatt 79/18**

(45) Bekanntmachung des Hinweises auf die Patenterteilung: **24.03.82 Patentblatt 82/12**

(84) Benannte Vertragsstaaten: **BE DE FR GB IT NL**

(56) Entgegenhaltungen:
**DE-A-2 305 704**
**NL-A-7 602 864**
**US-A-3 102 548**
**US-A-3 841 401**

(73) Patentinhaber: **HOECHST AKTIENGESELLSCHAFT, Postfach 80 03 20, D-6230 Frankfurt/Main 80 (DE)**

(72) Erfinder: **Wilski, Hans, Dr., Händelstrasse 18, D-6232 Bad Soden am Taunus (DE)**
Erfinder: **Interthal, Werner, Dr., Dr. Ludwig-Opel-Strasse 62, D-6090 Rüsselsheim (DE)**
Erfinder: **Gruber, Günter, Dr., Birsteiner Strasse 27, D-6000 Frankfurt/Main 61 (DE)**
Erfinder: **Siebos, Gerhard, Wellingsbüttlerweg 56c, D-2000 Hamburg 65 (DE)**

**EP 0 003 821 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Verringerung des Reibungsdruckverlustes von turbulent oder pulsierend strömenden wässrigen Flüssigkeiten und Suspensionen

Es ist allgemein bekannt, dass turbulent strömende Flüssigkeiten an den sie begrenzenden Wänden einen Reibungswiderstand erfahren. Es ist auch bekannt, dass man diesen Reibungswiderstand durch Zusatz geringer Mengen bestimmter Stoffe herabsetzen kann. Stoffe, die diese reibungswiderstandsvermindernde Wirkung zeigen, werden im englischen Sprachgebrauch als «drag reducing agents» bezeichnet. Im deutschsprachigen Raum wird für diese Stoffe die Bezeichnung «Strömungsbeschleuniger» verwendet (vgl. hierzu E. Dschagarowa und G. Mennig, Rheologica Acta 14, 1089 (1975) und die dort zitierte Literatur). Unter einem Strömungsbeschleuniger versteht man danach einen Stoff, der in geringer Menge einer turbulent oder pulsierend strömenden Flüssigkeit zugesetzt, diese Flüssigkeit – unter sonst gleichen Bedingungen – schneller strömen lässt. Strömungsbeschleuniger bewirken, dass man mit einer gegebenen Pumpe durch eine gegebene Rohrleitung mehr Flüssigkeit fördern kann.

In vielen Fällen ist allein schon diese Tatsache ein technischer Gewinn, wenn z.B. eine Rohrleitung im Normalbetrieb voll ausgelastet ist und zu bestimmten Zeiten ein Spitzenverbrauch zu fördern wäre. Da mit einer gegebenen Pumpenleistung bei der Verwendung von Strömungsbeschleunigern (im folgenden mit «SB» abgekürzt) mehr Flüssigkeit gefördert werden kann, wird auch in vielen Fällen die damit verbundene Energieeinsparung einen technischen Vorteil bringen. Schliesslich kann man, wenn man die Durchsatzmenge nicht vergrössern will, bei Verwendung von SB den Druckverlust herabsetzen oder Rohre mit kleinerem Querschnitt verwenden. Beides sind Massnahmen, die die Wirtschaftlichkeit im Betrieb einer Rohrleitung verbessern können.

Als Strömungsbeschleuniger bekannt sind verschiedene Verbindungen. An dieser Stelle erwähnt seien eine Reihe von hochmolekularen Verbindungen. So können z.B. Polyisobutylen (A. Ram, E. Finkelstein und C. Elata, I & EC Process Design und Development 6, Nr. 3, 309 (1967)) oder verschiedene Polyacrylate und Polystyrolderivate (DE-AS 2 056 700), in flüssigen Kohlenwasserstoffen als Strömungsbeschleuniger eingesetzt werden. Als Strömungsbeschleuniger für Wasser wurde in der Literatur z.B. Polyäthylenoxid und darüber hinaus auch die Verwendung von Polyacrylamid beschrieben (BHRA Fluid Engineering ISBNO 900 983 71 × 1977, Seite B 3–37 bis 3–50 und Journal of Applied Polymer Science, Vol 18 (1974) Seiten 3403 bis 3421). Der Einsatz von Polyacrylamiden zur Verhinderung der Trennung und des Absetzens von wässrigen Suspensionen (Feststoff-Wasser-Gemischen) ist aus der US-Patentschrift 3 524 682 bekannt.

In der NL-A 7 602 864 ist die Verwendung eines Polymers als Strömungsbeschleuniger beschrieben, das hergestellt wird durch Polymerisation unter anderem von Polyacrylamid mit Hilfe von hochenergetischen Strahlen. Bei dieser Art der Polymerisation erreicht man aber einen hohen Vernetzungsgrad des Polymers, was eine Verringerung der Löslichkeit in Wasser mit sich bringt. Dementsprechend wurde bei einer Nacharbeitung dieser Veröffentlichung gefunden, dass die danach hergestellten Polymerisate 10–30 Gew.-% unlösliche Bestandteile enthalten, die in Wasser lediglich aufquellen. Diese nur unvollständige Löslichkeit in Wasser macht diese Polymere ungeeignet als Strömungsbeschleuniger.

Bei Versuchen, die vorgenannten, oder auch andere in der Fachliteratur beschriebenen Verbindungen, in technischem Massstab als SB für wässrige Flüssigkeiten oder Suspensionen einzusetzen, zeigt sich jedoch, dass allen diesen Verbindungen erhebliche Mängel anhaften. Zunächst scheiden naturgemäss für wässrige Flüssigkeiten alle die Verbindungen als Strömungsbeschleuniger aus, die in Wasser nicht oder nicht genügend löslich sind, wie z.B. Polyisobutylen. Das oben erwähnte Polyäthylenoxid, das an sich gute strömungsbeschleunigende Wirkung zeigt, wird in turbulenten Strömungen, insbesondere wenn hohe Schergefälle auftreten (z.B. in Pumpen oder Düsen) rasch abgebaut und unwirksam gemacht. Dieses Polymere ist also nicht für einen Einsatz über längere Zeiträume oder bei höheren Schergefällen geeignet. Die bisher beschriebenen Polyacrylamide sind zwar ebenfalls gute Strömungsbeschleuniger, doch lässt auch bei ihnen die Wirksamkeit und die Scherstabilität noch zu wünschen übrig, wie im einzelnen noch in den Beispielen gezeigt werden wird.

Überraschenderweise wurde nun gefunden, dass zum Unterschied von den bekannten, gegebenenfalls teilverseiften Polyacrylamiden, ganz bestimmte, ausgewählte Polyacrylamide sowie deren Teilverseifungsprodukte besondere Vorteile bei der Verwendung als Strömungsbeschleuniger in wässrigem Medium zeigen. Bei diesen gegebenenfalls teilverseiften Polyacrylamiden handelt es sich um Produkte, die bei ihrer Herstellung, ohne dass sie ihre Wasserlöslichkeit eingebüsst haben, als wässrige, formstabile, schneidbare Gallerte anfallen. Es wurde gefunden, dass diese Produkte allen bisher bekannten Strömungsbeschleunigern sowohl in der Wirkung als auch in der Scherstabilität deutlich überlegen sind. Die Tatsache, dass diese gegebenenfalls teilverseiften Polyacrylamide bei ihrer Herstellung als Gallerte anfallen, stellt ein wesentliches Merkmal dieser Produkte im Hinblick auf ihre Eignung als Strömungsbeschleuniger dar. Unter «Gallerte» soll hier und im Rahmen der vorliegenden Erfindung eine gummiähnliche Masse verstanden werden, die allgemein klar durchsichtig ist und die beim Liegen auf einer ebenen Fläche bei 20 °C ihre Form nicht ändert. Die Gallerte läuft also nicht auseinander wie es z.B. bei einer hochviskosen Lösung der Fall ist; die Gallerte

lässt sich auch, im Gegensatz zu der hochviskosen Lösung, mit dem Messer schneiden; sie verhält sich ähnlich wie ein Gummi.

Gegenstand der Erfindung ist somit ein Verfahren zur Verringerung des Reibungsdruckverlustes von turbulent oder pulsierend strömenden wässrigen Flüssigkeiten und Suspensionen durch Zusatz von 1 bis 1000 ppm eines Polyacrylamids als Strömungsbeschleuniger, welches dadurch gekennzeichnet ist, dass man ein Polyacrylamid oder ein teilverseiftes Polyacrylamid als Strömungsbeschleuniger verwendet, das bei seiner Herstellung, bei gleichzeitiger Erhaltung seiner Wasserlöslichkeit als wässrige, formstabile, schneidbare Gallerte anfällt, die, in 1 cm Schichtdicke auf eine Stahlplatte aufgetragen, beim Kugelfalltest mit einer Stahlkugel von 5 mm Durchmesser eine Rückprallelastizität von 5–70%, insbesondere von 25–45% aufweist.

Die Erfindung betrifft insbesondere die Verwendung solcher Polyacrylamide oder verseifter Polyacrylamide als Strömungsbeschleuniger, die nach der Herstellung in Form einer Gallerte vorliegen, die in 1 cm Schichtdicke auf eine Stahlplatte aufgetragen, beim Kugelfalltest mit einer Stahlkugel von 5 mm Durchmesser eine Rückprallelastizität von 5–70%, insbesondere von 25–45% aufweisen.

Die Herstellung der erfindungsgemäss zu verwendenden, als Gallerten anfallenden Polyacrylamide oder teilverseiften Polyacrylamide erfolgt nach an sich bekannten Polymerisationsverfahren, jedoch ohne Rühren und ausgehend von bestimmten Konzentrationsbereichen der Monomeren-Lösung und in bestimmten Temperaturbereichen. Im allgemeinen werden zur Herstellung dieser Produkte etwa 15–30 gewichtsprozentige, vorzugsweise 20–25 gewichtsprozentige wässrige Lösungen von Acrylamid unter Zugabe geeigneter Katalysatoren sowie gegebenenfalls bei Herstellung von verseiften Polyacrylamiden, unter Zugabe von Alkalien polymerisiert. Die Polymerisation erfolgt ohne Rühren bei einer Ausgangstemperatur von etwa 10–30 °C; im Vakuum der Polymerisation steigt die Temperatur im Reaktionsgemisch auf etwa 70–98 °C an und wird bis zum Abschluss der Reaktion in diesem Bereich, zweckmässig bei etwa 80–95 °C gehalten. Nach Abschluss der Reaktion liegt eine formstabile Gallerte vor, die, zweckmässig nach Zerkleinerung, für die Verwendung als Strömungsbeschleuniger in Wasser gelöst wird. Zur Herstellung der erfindungsgemäss zu verwendenden Polymeren geeignete Katalysatoren sind Perverbindungen, welche unter den Reaktionsbedingungen in Radikale zerfallen und dadurch die Polymerisation auslösen. Solche Perverbindungen sind z. B. Peroxide wie Wasserstoffperoxid, Dibenzoylperoxid, tert. Butylhydroperoxid, Cumolhydroperoxid und Methyl-Äthylketonperoxid. Ebenso geeignet sind noch Peroxidisulfate wie z. B. Kalium-, Natrium- und Ammoniumperoxidisulfat. Besonders geeignet als Katalysatoren sind Redoxsysteme, wie z. B. Peroxidisulfat/Pyrosulfat; Peroxidisulfat/Formaldehydsulfoxylat und Persulfate/Sulfinsäuren. Bevorzugt kommen zur Herstellung der erfindungsgemäss zu verwendenden Polymere die in der DE-OS 2 128 009 beschriebenen Initiatorsysteme zur Anwendung.

Eine Vorrichtung zur kontinuierlichen Herstellung der erfindungsgemäss zu verwendenden Polymeren wird in der britischen Patentschrift 1 317 408 beschrieben.

Durch Zusatz von Alkalien wie z. B. Natrium- oder Kaliumhydroxid, Natrium- oder Kaliumcarbonat und/oder unter Anwendung von erhöhtem Druck tritt bei der Polymerisation teilweise Verseifung der Säureamidgruppen zu Carbonsäuregruppen auf. Der gewünschte Verseifungsgrad der Polyacrylamide kann vor allem durch die Menge des zugesetzten Alkalis gesteuert werden. Im einfachsten Fall erfolgt die Verseifung der Säureamidgruppe etwa im stöchiometrischen Verhältnis zum zugegebenen Alkali. Für die Verwendung als Strömungsbeschleuniger werden im allgemeinen die teilweise verseiften Polyacrylamide vorgezogen. Dabei wird meist ein Verseifungsgrad von etwa 5–90 Gew.-%, vorzugsweise von 20–40 Gew.-% eingehalten.

Eine weitere Charakterisierung der erfindungsgemäss zu verwendenden polymeren Gallerten kann am einfachsten durch ihre Rückprallelastizität erfolgen. Unter Rückprallelastizität versteht man beim Stossversuch das Verhältnis von zurückgewonnener zu aufgewendeter Arbeit bzw. bei dem besonders einfach durchzuführenden Kugelfalltest das Verhältnis der Rückprallhöhe einer Stahlkugel zu ihrer Fallhöhe (vgl. hierzu K. Memmler, Handbuch der Kautschuk-Wissenschaft 1930, S. 640 ff). Es wurde festgestellt, dass für die Verwendung als Strömungsbeschleuniger solche Polyacrylamide oder teilverseiften Polyacrylamide in Betracht kommen, die nach ihrer Herstellung in Form einer Gallerte vorliegen, die, in 1 cm Schichtdicke auf eine Stahlplatte aufgetragen, beim Kugelfalltest eine Rückprallelastizität von grösser als 5–70%, insbesondere von 25–45% aufweisen. Polyacrylamide oder teilverseifte Polyacrylamide des Handels, deren Polymerisation im allgemeinen in Suspension oder in nichtwässrigem Lösungsmittel erfolgt und die diese Gallertform mit der genannten charakteristischen Rückprallelastizität nicht aufweisen, haben sich als Strömungsbeschleuniger nicht oder weniger gut geeignet erwiesen als die erfindungsgemäss zu verwendenden Produkte.

Zur Messung der Rückprallelastizität der polymeren Gallerte nach dem Kugelfalltest dient die in Fig. 2 dargestellte Vorrichtung. Auf eine Stahlplatte (10) von 1 cm Dicke wird eine 1 cm dicke Scheibe des zu prüfenden Polymeren (11) gelegt und mit Talkum bepudert. Auf die bepuderte Oberfläche wird dann ein 100 cm langes Glasrohr (12) mit 2 cm Durchmesser gestellt und durch dieses eine Stahlkugel von 5 mm Durchmesser (13) auf die Gallertscheibe fallengelassen. Die Rückprallelastizität R wird dann berechnet nach der Formel

$$R = \frac{H_r}{H_f}$$

in der $H_r$ die Rückprallhöhe und $H_f$ die Fallhöhe bedeutet.

Bei der vorliegenden Anordnung ist $H_f = 100$ cm. Daher ist die Rückprallhöhe, in cm gemessen, gleich der Rückprallelastizität in %. Polyacrylamide mit zu geringer Rückprallelastizität sind als Strömungsbeschleuniger weniger gut geeignet, so dass Polymere mit relativ hoher Rückprallelastizität angestrebt werden, wobei allerdings Werte von mehr als etwa 70% nur schwer erreicht werden.

Zur besseren Handhabung bei der Anwendung als Strömungsbeschleuniger kann man die bei der Polymerisationsreaktion anfallenden Gallerten in geeigneten Vorrichtungen zerkleinern. Die so erhaltenen Gelpartikel lassen sich unmittelbar zur Herstellung von wässrigen Lösungen der Strömungsbeschleuniger verwenden. Zur Verhinderung des Zusammenbackens der Gelpartikel können diese jedoch auch mit einer schlecht benetzbaren, in Wasser schwer oder unlöslichen oder quellbaren Substanz wie z.B. Maisstärke, Talkum oder Magnesiumoxid bepudert werden. Es ist weiterhin auch möglich, die bei der Polymerisationsreaktion anfallenden Gallerten durch Trocknen und anschliessendes Mahlen zu Pulver zu verarbeiten. Die so vorbereiteten, als Gelpartikel oder Pulver vorliegenden Polymeren, mit einer Teilchengrösse vorzugsweise von etwa 0,2 bis 5 mm Durchmesser, lassen sich leicht unter Rühren in Wasser zu einer Stammlösung lösen, die dann unmittelbar in die zur Verringerung des Reibungsdruckverlustes zu behandelnden wässrigen Medien eingegeben werden können.

Die erfindungsgemäss als Strömungsbeschleuniger verwendeten, gegebenenfalls teilverseiften Polyacrylamide werden der zu behandelnden strömenden wässrigen Flüssigkeit in Mengen von etwa 1 bis 1000 ppm zugegeben. Die anzuwendende Konzentration des Strömungsbeschleunigers hängt unter anderem vor allem von der Zusammensetzung der strömenden wässrigen Flüssigkeiten oder Suspensionen ab. Meist liegt die Anwendungskonzentration für die Strömungsbeschleuniger im Bereich von 10 bis 100 ppm. Neben der bevorzugten Zugabe der erfindungsgemäss zu verwendenden Strömungsbeschleuniger in Form einer möglichst konzentrierten wässrigen Stammlösung kann man die gegebenenfalls teilverseiften Polyacrylamide auch in Form wässriger Suspension oder als trockene Pulver den zu behandelnden strömenden wässrigen Flüssigkeiten oder Suspensionen zuspeisen.

Bei den zu behandelnden wässrigen Flüssigkeiten oder Suspensionen kann es sich um reines Wasser, gegebenenfalls auch Heisswasser, wässrige Lösungen oder um Aufschlämmungen von wasserunlöslichen oder wasserschwerlöslichen Substanzen wie z.B. Sand, Ton oder Erz- oder andere Mineralpartikeln in Wasser oder wässrigen Lösungen handeln.

Es hat sich gezeigt, dass sich eine vergleichende Beurteilung der verschiedenen Strömungsbeschleuniger aufgrund der Angaben in der Literatur ausserordentlich schwierig gestaltet, da die für diese Beurteilung massgeblichen Werte für die strömungsbeschleunigende Wirkung und die Scherstabilität der geprüften Produkte ganz wesentlich von der Messmethode und der bei der Messung benutzten Apparatur abhängen. Apparate, bei denen die Lösungen durch Kapillaren (Röhren von 0,2 bis 2 mm Durchmesser) strömen, liefern in der Regel besonders hohe Werte der Strömungsbeschleunigung. Da diese Ergebnisse aber wegen der Besonderheit der Kapillarströmung nicht ohne weiteres in den technischen Massstab übertragbar sind, sollen diese hier ausser Betracht bleiben. Aber auch bei grösseren Apparaten sind die Messwerte nicht direkt vergleichbar. Dies gilt ganz besonders für die Bestimmung der Scherstabilität. Für diese Grösse gibt es noch kein objektiv definiertes technisches oder physikalisches Mass. Es ist aber bekannt, dass SB in einfachen Rohrströmungen verhältnismässig wenig abgebaut werden. Der Hauptabbau erfolgt in den Pumpen. Bei einer Strömungsapparatur, bei der die SB-haltige Flüssigkeit im Kreislauf umgepumpt wird, ist der Abbau demgemäss wegen des häufigen Durchströmens der Pumpe viel grösser als bei einer geraden Rohrleitung. Die Stärke des Abbaus hängt von der Pumpenkonstruktion ab. Aus allen diesen Betrachtungen folgt, dass man vergleichbare Zahlen nur dann erhält, wenn man die verschiedenen zu vergleichenden Produkte in ein und derselben Apparatur unter identischen Bedingungen untersucht. Damit die so gewonnenen Zahlen wenigstens annähernd auf technische Dimensionen übertragbar sind, muss die verwendete Strömungsapparatur eine gewisse Mindestgrösse besitzen. Eine solche Apparatur und die damit durchgeführte Untersuchung ist im folgenden beschrieben:

Die zur Untersuchung von Strömungsbeschleunigern verwendete Apparatur ist in Fig. 1 skizziert. Zur Prüfung wird die zu untersuchende Substanz im Behälter (1) unter Verwendung des Blattrührers (2) aufgelöst, wobei die Ventile (3) und (4) geschlossen bleiben. Nach erfolgter Auflösung werden beide Ventile geöffnet und die Lösung mit Hilfe der Pumpe (5) – in unserem Fall eine regelbare Mono-Pumpe 2NE80 von Netzsch – durch den Wärmetauscher (6) und den Durchflussmesser (7) wahlweise durch das Rohr A oder B geschickt. Nach einer gehörigen Einlaufstrecke wird der Druckabfall über eine Messstrecke (8) von 1 m Länge mit dem Differenzdruckmanometer (9) bzw. (9a) gemessen. Nach dem Passieren der Messstrecke strömt die Flüssigkeit in den Behälter (1) zurück und setzt den Kreislauf fort.

Die Rohre A und B haben eine Länge von 6 m; der Innendurchmesser des Rohres A beträgt 1,4 cm und der des Rohres B 3,0 cm.

Der Druckabfall an der Messstrecke (8) ist ein besonders einfaches Mass, um die Wirksamkeit eines Strömungsbeschleunigers zu beurteilen. Um von den speziellen Dimensionen der Apparatur frei zu werden, wählt man als Mass für die Wirksamkeit eines SB das Verhältnis m des Druckverlustes, der sich mit reinem Wasser einstellt und dem, der mit einer SB-Lösung erzielt wird, also

$$m = \frac{P_W}{P_{SB}}$$

$P_W$ = Druckverlust mit reinem Wasser
$P_{SB}$ = Druckverlust mit SB-Lösung.

Je besser der Strömungsbeschleuniger, um so grösser ist das Druckverlustverhältnis m.

Die Scherstabilität eines Strömungsbeschleunigers, d.h. seine Widerstandsfähigkeit gegen den Abbau in hohen Schergefällen (wie sie vor allem in Pumpen auftreten) prüft man einfach dadurch, dass man die SB-Lösung lange Zeit in der Strömungsapparatur umpumpt. Die Zeit, die erforderlich ist, um das anfängliche Druckverlustverhältnis auf einen bestimmten Wert (z.B. 50% oder 10% des Anfangswertes) zu erniedrigen, ist ein direktes (relatives) Mass für die Scherstabilität.

Beispiel 1

In einem mit Polyäthylen ausgekleideten Reaktionsgefäss wurden 750 $cm^3$ vollentsalztes Wasser vorgelegt und darin unter Rühren 250 g Acrylamid, 66,6 g Kaliumcarbonat, 0,5 g Dibutylaminhydrochlorid, 0,25 g Ammoniumperoxidisulfat und 0,25 g einer Verbindung der Formel

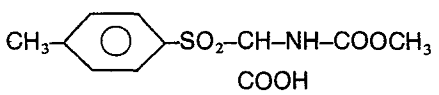

gelöst. Nach Verdrängen des Luftsauerstoffs durch Einleiten vom Stickstoff polymerisiert das Reaktionsgemisch. Bei einer Ausgangstemperatur von 20 °C steigt die Temperatur im Verlauf einer Stunde auf 90 bis 95 °C. Eine mechanische Durchmischung erfolgt nicht. Das danach erhaltene Polymerisat stellt eine formstabile, schneidbare, gumiielastische Gallerte dar. Die Rückprallelastizität, in der vorher beschriebenen Weise gemessen, beträgt 40%; der Verseifungsgrad, ermittelt durch titrimetrische Bestimmung der Carboxylgruppen, beträgt 27 Gew.-%. Die Gallerte (Polymeres I) ist in Wasser rückstandfrei löslich.

Die strömungsbeschleunigende Wirkung, gemessen in der vorher beschriebenen Apparatur, ausgedrückt durch das vorher erläuterte Druckverlustverhältnis, ist in Fig. 3, Kurve a in Abhängigkeit von der Konzentration dargestellt. Die Messwerte wurden unmittelbar nach Einschalten der Apparatur mit Rohr A (1,4 cm Durchmesser) und einer Reynoldszahl Re = 100 000 erhalten, zum Zeitpunkt t = o zu dem noch kein Abbau eingetreten war. Bei Konzentrationen von 0 bis 17 ppm (= Gramm SB pro $m^3$ Wasser) nimmt die Wirkung zu. Oberhalb einer Konzentration von 17 ppm ist keine weitere Verbesserung zu erreichen. Der Endwert bei 17 ppm beträgt m = 5, d.h. der Druckverlust mit SB ist nur noch $^1/_5$ des Druckverlustes des reinen Wassers. Zum Vergleich ist die Wirkung eines als guter SB beurteilten, unter der Bezeichnung «SEPARAN®AP 273» im Handel erhältlichen Polyacrylamids (Produkt A) (vgl. BHRA Fluid Engineering ISBNO 900983 71X 1977, Seite B3–37 bis B3–50, besonders Seite B3–39, Absatz 5) gestrichelt als Kurve b in Fig. 3 mit eingezeichnet. Dieses als Pulver vorliegende anionische Polyacrylamid, dessen Herstellung durch Polymerisation einer verdünnten Lösung erfolgt, erreicht erst bei einer Konzentration von 34 ppm seine volle Wirksamkeit. Von dem erfindungsgemäss zu verwendenden Polymeren I wird also nur die Hälfte benötigt, um die gleiche Wirkung zu erzielen. Kurve c zeigt schliesslich die Wirkung eines anderen unter der Bezeichnung BOZEFLOC® A 41 im Handel erhältlichen Polyacrylamids (Produkt B), (vgl. hierzu die Firmenschrift: «Merkblatt A Nr. 8601 – der Benckiser Knapsack GmbH, Ladenburg), mit noch geringerer Wirksamkeit.

Die geringe erforderliche Anwendungskonzentration der erfindungsgemäss anwendbaren Polymeren ist nicht deren einziger Vorteil. Überraschenderweise zeigen diese Produkte auch eine bisher nicht erreichte Scherstabilität. Fig. 4 veranschaulicht die Ergebnisse eines Abbau-Versuches, bei dem wässrige Lösungen der Konzentration 60 ppm in der vorher beschriebenen Apparatur längere Zeit umgepumpt wurden. Die Konzentration von 60 ppm wurde gewählt, da bei dieser Konzentration auch die zum Vergleich herangezogenen SB ihre maximale Wirkung entfalten. Der Versuch wurde mit Rohr A (1,4 cm Durchmesser) und einer Reynoldszahl Re = 100 000 durchgeführt. Nach einer Umpumpzeit von 400 Minuten ist das erfindungsgemäss zu verwendende Polymere I noch völlig unverändert (Kurve d), während andere, zum Vergleich herangezogene Polymere weitgehend abgebaut sind (Kurve e = Produkt A; Kurve 3f, Polyäthylenoxid = Produkt C gemäss Journal of Applied Polymer Science Vol 18 (1974) S. 3403–3421), bes. S. 3406 letzter Abs. und S. 3408 Tabelle 1). Die folgende Tabelle veranschaulicht die Ergebnisse noch einmal:

| Polymer, zu 60 ppm in Wasser gelöst | $\Delta P_W/\Delta P_{SB}$ Zu Versuchsbeginn | $\Delta P_W/\Delta P_{SB}$ Nach 400 Minuten |
|---|---|---|
| Über Gelstufe hergestellt (I) | 5,0 | 5,0 |
| Handelsübliches Polyacrylamid (A) | 5,0 | 2,3 |
| Handelsübliches Polyäthylenoxid (C) | 4,4 | 1,2 |

Es soll nicht unerwähnt bleiben, dass es eine Reihe von Strömungsbeschleunigern mit sehr geringer Wirkung, aber verhältnismässig guter Scherstabilität gibt. Die verhältnismässig gute Scherstabilität dieser Produkte bringt aber keinen technischen Nutzen, da die Absolutwerte der Strömungsbeschelunigung zu gering sind. Als typisches Beispiel hierfür ist in Fig. 4 das Verhalten einer Carboxymethylcellulose (Produkt D) gestrichelt eingezeichnet (Kurve g). Die verwendete Carboxymethylcellulose besitzt, als 2%ige wässrige Lösung im Kugelfall-Viskosimeter nach Höppler gemessen, eine Viskosität von 3000 Pa·s.

In diesem Fall beträgt $\Delta\ p_W/\Delta\ P_{SB}$ = 1,25 zu Versuchsbeginn und = 1,14 nach 400 Minuten. Hierbei ist zu beachten, dass der Wert $\Delta\ P_W/\Delta\ P_{SB}$ = 1 völlige Unwirksamkeit bedeutet. Strömungsbeschleuniger mit guter Wirkung (z.B. $\Delta\ P_W/\Delta\ P_{SB}$ = 5) und gleichzeitig guter Scherstabilität sind bisher noch nicht beschrieben worden.

Beispiel 2

Das nach Beispiel 1 hergestellte Polymer I und die Produkte A und C wurden in der vorher beschriebenen Strömungsapparatur geprüft, und zwar derart, dass die Messwerte mit Rohr A bei einer Reynoldszahl Re = 100 000 erst nach einer halben Stunde Umpumpdauer abgelesen wurden. Innerhalb dieser halben Stunde ist bei den Produkten A und C bereits ein gewisser Abbau eingetreten. Nach dieser Zeit zeigt das erfindungsgemäss anwendbare Polymere I (Kurve h in Fig. 5) bei 40 ppm seine volle Wirksamkeit von $\Delta\ P_W/\Delta\ P_{SB}$ = 5, während handelsübliches Polyacrylamid (Produkt A) erst bei 80 ppm diese Wirkung erreicht (Kurve j). Polyäthylenoxid (Produkt C) erreicht selbst bei 100 ppm kaum den Wert $\Delta\ P_W/\Delta\ P_{SB}$ = 2,5 (Kurve k).

Beispiel 3

Nach den Angaben in Beispiel 2 der GB-PS 1 317 408 wird in einem röhrenförmigen Reaktor von 3 m Länge und 20 cm lichtem Durchmesser, dessen Innenfläche aus Polyäthylen besteht, eine wässrige Monomerenlösung, welche 24,45% Acrylamid, 73,30% Wasser, 2,2% Natriumcarbonat, 0,024% N-p-Tolylsulfonmethylcarbamidsäuremethylester, 0,024% Ammoniumperoxydisulfat, 0,048% Di-n-butylaminhydrochlorid, 0,024% Cuacetylacetonatlösung (1 ml Lösung entspricht 12,3 $\mu$m $Cu^{++}$) enthält, polymerisiert. Die Polymerisat-Gallerte (Polymeres II) tritt am unteren Ende des Reaktors durch Quetschwalzen aus. Man erhält pro Stunde 38 kg Polymerisatgallerte. Diese ist in Wasser klar löslich, hat einen Verseifungsgrad von 10 Gew.-% und besitzt eine relative Viskosität von 1,58 bei 25 °C, gemessen an einer wässrigen Lösung, die 1 Mol Natriumnitrat und 0,05 Gew.-% des Polymerisates enthält. Die Rückprallelastizität beträgt 38%. Der $\Delta\ P_W/\Delta\ P_{SB}$-Wert, gemessen bei einer Anwendungskonzentration von 60 ppm in der vorher beschriebenen Strömungsapparatur beträgt bei Re = 100 000 zu Versuchsbeginn 5, und nach 400 Minuten Umpumpzeit 3,4.

Beispiel 4

Das gemäss Beispiel 1 erhaltene Polymere I wurde zu 30 ppm in einer Mischung aus 60 Gew.-% feingemahlenem Limonit (Eisenerz) und 40 Gew.-% Wasser aufgelöst und die Suspension in der vorher beschriebenen Strömungsapparatur mit Re = 100 000 (in Rohr B von 3 cm Durchmesser) umgepumpt. Für das Druckverlustverhältnis ergab sich $\Delta\ P_W/\Delta\ P_{SB}$ = 3,7 zur Zeit t = o. Dies bedeutet, dass der Druckverlust bei Verwendung des Polymeren I nur $^1/_{3,7}$, also knapp ein viertel des Druckverlustes betrug, der sich ohne Verwendung des SB in der Apparatur eingestellt hätte.

Beispiel 5

Eine Schute (offenes Schiff ohne eigenen Motor) wurde durch einen Saugbagger mit 150 t nassem Flussand beladen und an eine geeignete Stelle zum Entleeren transportiert. Ein Pumpschiff wirbelte dort mit zwei starken Wasserstrahlen den Sand auf und saugte die Aufschlämmung durch eine Zentrifugalpumpe ab. Durch eine Rohrleitung von 142 m Länge und 0,25 m Durchmesser wurde die Sandsuspension in ein Spülfeld gedrückt. Für das Entleeren der Schute wurden 60 Minuten benötigt. Bei einer Wiederholung des Versuchs wurde eine 0,5gewichtsprozentige Stammlösung aus dem nach Beispiel 1 hergestellten Polymeren I mit Hilfe einer Speisepumpe unmittelbar nach der Saugpumpe in die Rohrleitung zum Spülfeld gedrückt. Die Stammlösung wurde durch Auflösen von 60 kg eines mit Maisstärke gepuderten Gallert-Granulats des Polymeren I mit 60% Wassergehalt und einer Teilchengrösse von 3 bis 5 mm in 4000 l Flusswasser unter Rühren hergestellt. Die Speisepumpe wurde so eingestellt, dass sich in der Rohrleitung eine Konzentration des SB von 50 ppm einstellte. Unter diesen Bedingungen betrug die für das Entleeren der Schute erforderliche Zeit nur noch 31 Minuten.

Beispiel 6

In einem mit Polypropylen ausgekleideten zylindrischen Reaktionsgefäss werden 938 ml entionisiertes Wasser vorgelegt und darin unter Rühren 54,4 g Natriumcarbonat und 312 g Acrylamid gelöst. Nach Einstellen der Temperatur auf 20 °C mittels eines thermostabilisierten Wasserbades und Verdrängen der Luft durch Stickstoff-Gas werden 0,6 g Dibutylamin-Hydrochlorid, 0,3 ml einer Kupferacetylacetonat-Lösung (1 g Lösung entspricht 12,3 $\gamma$Cu), 0,25 g einer Verbindung der Formel

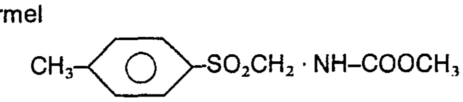

und 0,25 g Ammoniumperoxidisulfat unter Rühren zugegeben. Nach Abstellen des Rührwerks und Entfernen des Rührers polymerisiert das Reaktionsgemisch bei 20 °C nach einer Induktionsperiode von 58 Minuten. Die Temperatur steigt auf 92 °C an; danach wird noch 4 Stunden lang bei 85 °C nachgeheizt.

Nach dem Abkühlen wird eine formstabile, gummielastische Polymergallerte (Polymeres III) erhalten, die eine Rückprallelastizität von 37,8% besitzt. Die Gallerte wird zerkleinert, getrocknet und zu einem pulverförmigen Produkt gemahlen, das sich gut in Wasser lösen lässt.

In der vorher beschriebenen Strömungsapparatur wird die Wirkung als Strömungsbeschleuniger des Polymeren III und zum Vergleich der handelsüblichen Polyacrylamide Produkt B und Produkt C bei einer Anwendungskonzentration von jeweils 15 ppm und bei Re = 100 000 untersucht. In der nachfolgenden Tabelle sind die hierbei gemessenen Ergebnisse, dargestellt durch das Druckverlustverhältnis $m = \Delta P_W/\Delta P_{SB}$, zusammengestellt. Hierbei ist zu berücksichtigen, dass ein Wert von m = 1 völlige Unwirksamkeit als Strömungsbeschleuniger bedeutet. In der Tabelle ist ausserdem zum Vergleich der Verseifungsgrad in Gew.-% sowie die relative Viskosität ($\eta_{rel}$) der Produkte aufgeführt. Die relativen Viskositäten werden bei 25 °C in wässriger Lösung, die 1 Mol pro Liter Natriumnitrat und 0,05 Gew.-% des Polyacrylamids enthält, gemessen.

| | Verseifungsgrad (Gew.-%) | $\eta$ rel | m |
|---|---|---|---|
| Polymeres III | 12 | 1,82 | 4,2 |
| Produkt B | 30 | 1,84 | 1,8 |
| Produkt C | 30 | 1,80 | 1,0 |

Die Ergebnisse zeigen die eindeutige Überlegenheit des Polymeren III gemäss der Erfindung als Strömungsbeschleuniger gegenüber handelsüblichen Polyacrylamiden (Produkt B und Produkt C) bei etwa übereinstimmender relativer Viskosität der geprüften Produkte.

**Patentansprüche**

1. Verfahren zur Verringerung des Reibungsdruckverlustes von turbulent oder pulsierend strömenden wässrigen Flüssigkeiten und Suspensionen durch Zusatz von 1 bis 1000 ppm eines Polyacrylamids als Strömungsbeschleuniger, dadurch gekennzeichnet, dass man ein Polyacrylamid oder ein teilverseiftes Polyacrylamid als Strömungsbeschleuniger verwendet, das bei seiner Herstellung bei gleichzeitiger Erhaltung seiner Wasserlöslichkeit als wässrige, formstabile, schneidbare Gallerte anfällt, die, in 1 cm Schichtdicke auf eine Stahlplatte aufgetragen, beim Kugelfalltest mit einer Stahlkugel von 5 mm Durchmesser eine Rückprallelastizität von 5–70% insbesondere von 25–45% aufweist.

2. Verfahren nach Anspruch 1, dadurch gekennzeichnet, dass man als Strömungsbeschleuniger ein als Gallerte vorliegendes, verseiftes Polyacrylamid mit einem Verseifungsgrad von 20–40 Gew.-% verwendet.

3. Verfahren nach Ansprüchen 1 und 2, dadurch gekennzeichnet, dass man der wässrigen Flüssigkeit oder Suspension 10 bis 100 ppm des Strömungsbeschleunigers zusetzt.

4. Verfahren nach Ansprüchen 1 bis 3, dadurch gekennzeichnet, dass man den Strömungsbeschleuniger, das gegebenenfalls teilverseifte Polyacrylamid, in Form einer wässrigen Stammlösung dem Hauptstrom der wässrigen Flüssigkeit oder Suspension zuspeist.

5. Verfahren nach Anspruch 3, dadurch gekennzeichnet, dass man die wässrige Stammlösung des Strömungsbeschleunigers durch Auflösen von kleinteiligen Gelpartikeln der gegebenenfalls teilverseiften Polyacrylamide mit Teilchengrösse von etwa 0,2 bis 5 mm Durchmesser herstellt.

6. Verfahren nach Ansprüchen 1 bis 3, dadurch gekennzeichnet, dass man den Strömungsbeschleuniger, das gegebenenfalls teilverseifte Polyacrylamid, als wässrige Suspension dem Hauptstrom der wässrigen Flüssigkeit oder Suspension zuspeist.

7. Verfahren nach Ansprüchen 1 bis 3, dadurch gekennzeichnet, dass man den Strömungsbeschleuniger, das gegebenenfalls verseifte Polyacrylamid, als trockenes Pulver dem Hauptstrom der wässrigen Flüssigkeit oder Suspension zuspeist.

**Claims**

1. Process for reducing the friction pressure drop of aqueous liquids and suspensions in turbulent or pulsating flow by adding from 1 to 1000 ppm of a polyacryl amide as drag reducing agent, which comprises using as drag reducing agent a polyacryl amide or partially saponified polyacryl amide obtained in its manufacturing process in the form of an aqueous, dimensionally stable jelly which has an elastic resilience of 5 to 7% especially of 25 to 45% when applied in a 1 cm thick layer on a steel plate and tested with a falling steel ball having a diameter of 5 mm.

2. The process of claim 1, wherein the jelly used as drag reducing agent is a polyacryl amide having a degree of saponification of from 20 to 40% by wight.

3. The process of claims 1 and 2, wherein from 10 to 100 ppm of the drag reducing agent are added to the aqueous liquid or suspension.

4. The process of claims 1 to 3, wherein the drag reducing agent, the optionally partially saponified polyacrylamide, is added to the main flow of the aqueous liquid or suspension in the form of an aqueous stock solution.

5. The process of claim 3, wherein the aqueous stock solution of the drag reducing agent is prepared by dissolving small particles of the polyacryl amide or partially saponified polyacryl amide having a diameter of from about 0,2 to 5 mm.

6. The process of claims 1 to 3, wherein the drag reducing agent 5 added to the main flow of the aqueous liquid or suspension in the form of an aqueous suspension.

7. The process of claims 1 to 3, wherein the drag reducing agent, the optionally partially saponified polyacrylamide, is added to the main flow of the aqueous liquid or suspension in the form of a dry powder.

**Revendications**

1. Procédé de réduction de la perte de pression par frottement de liquides ou de suspensions aqueux à écoulement turbulent ou pulsé par addition de 1 à 1000 ppm d'un polyacrylamide comme accélérateur d'écoulement, caractérisé en ce qu'on utilise un polyacrylamide ou un polyacrylamide partiellement saponifié, qui, lors de sa préparation, se présente tout en conservant sa solubilité dans l'eau sous la forme d'une gélatine aqueuse, de forme stable, sécable, laquelle appliquée sous une épaisseur de 1 cm sur une plaque d'acier, présente à l'essai de chute de bille avec une bille d'acier de 5 mm de diamètre, une élasticité de rebondissement de 5 à 70%, en particulier de 25 à 45%.

2. Procédé suivant la revendication 1, caractérisé en ce qu'on utilise comme accélérateur d'écoulement un polyacrylamide saponifié se présentant sous la forme d'une gélatine, ayant un degré de saponification de 20 à 40% en poids.

3. Procédé suivant l'une quelconque des revendications 1 et 2, caractérisé en ce qu'on ajoute au liquide ou à la suspension aqueux 10 à 100 ppm de l'accélérateur d'écoulement.

4. Procédé suivant l'une quelconque des revendications 1 à 3, caractérisé en ce qu'on envoie l'accélérateur d'écoulement, le polyacrylamide éventuellement partiellement saponifié, sous la forme d'une solution de base aqueuse, dans le courant principal du liquide ou de la suspension aqueux.

5. Procédé suivant la revendication 3, caractérisé en ce qu'on prépare la solution de base aqueuse de l'accélérateur d'écoulement par dissolution de fines particules de gel des polyacrylamides éventuellement partiellement saponifiés, ayant une taille de particules d'environ 0,2 à environ 5 mm de diamètre.

6. Procédé suivant l'une quelconque des revendications 1 à 3, caractérisé en ce qu'on introduit l'accélérateur d'écoulement, le polyacrylamide éventuellement partiellement saponifié, sous forme de suspension aqueuse dans le courant principal du liquide ou de la suspension aqueux.

7. Procédé suivant l'une quelconque des revendications 1 à 3, caractérisé en ce qu'on introduit l'accélérateur d'écoulement, le polyacrylamide éventuellement partiellement saponifié, sous forme de poudre sèche dans le courant principal du liquide ou de la suspension aqueux.

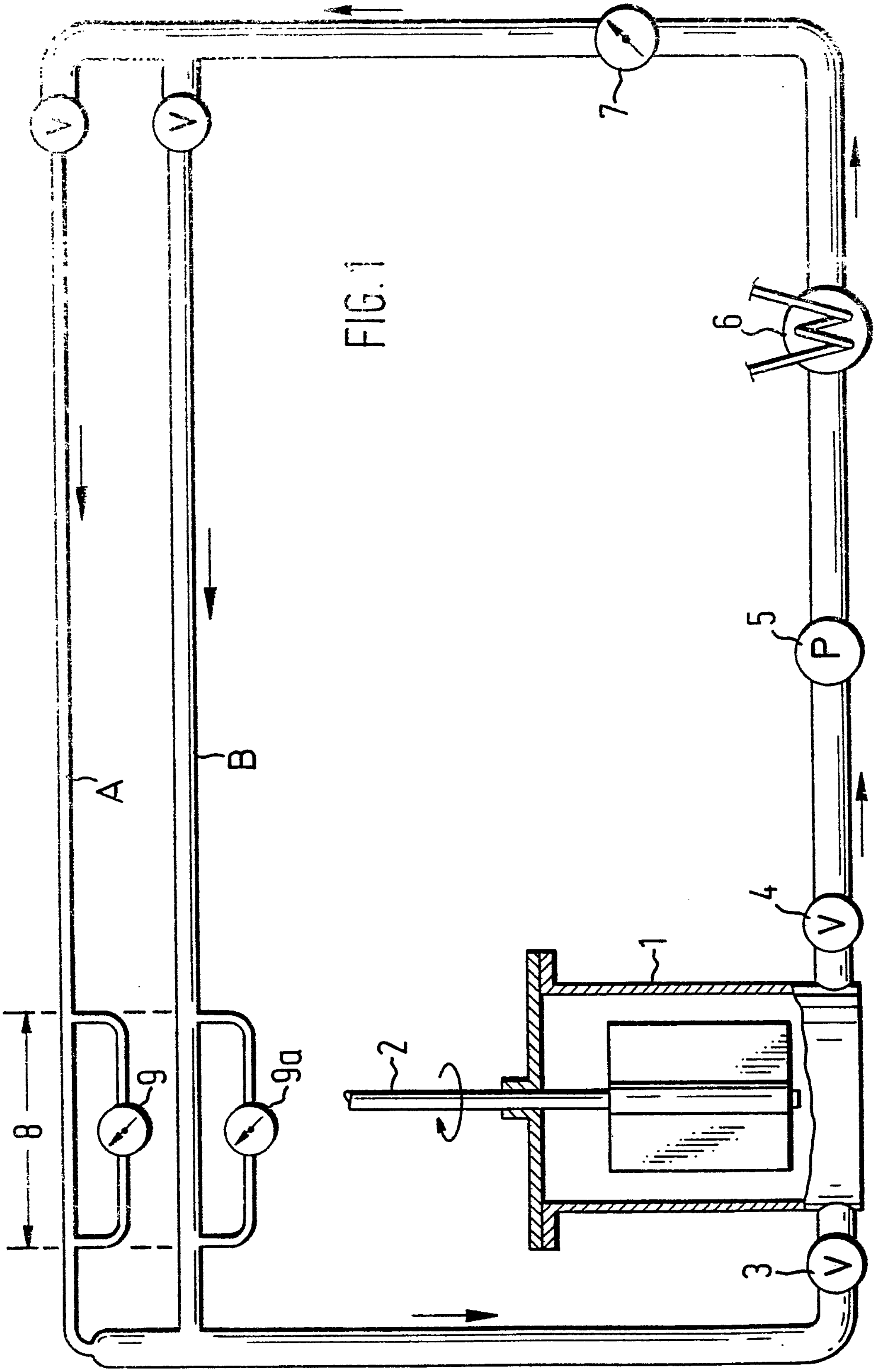


FIG. 1

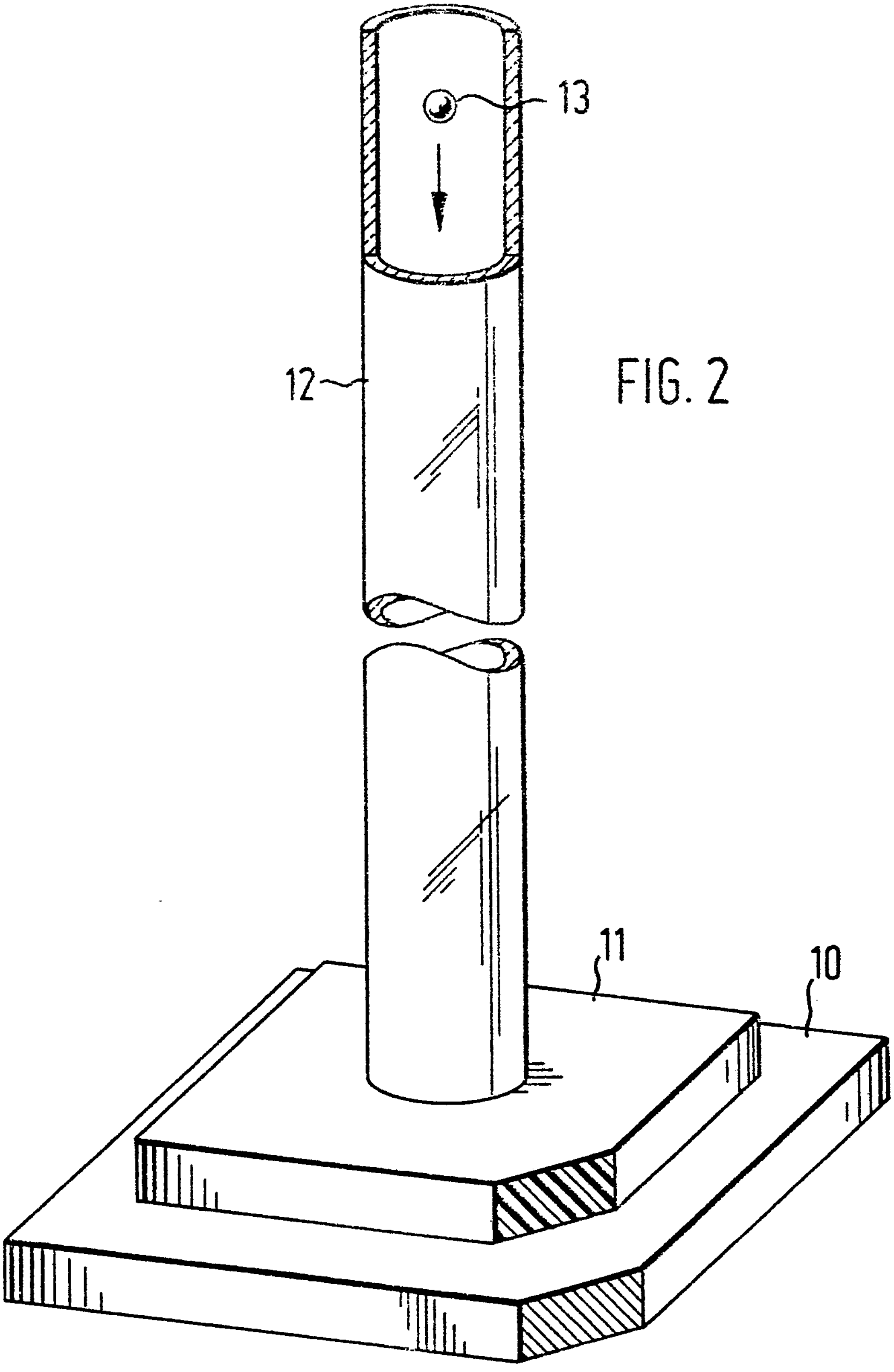


FIG. 2

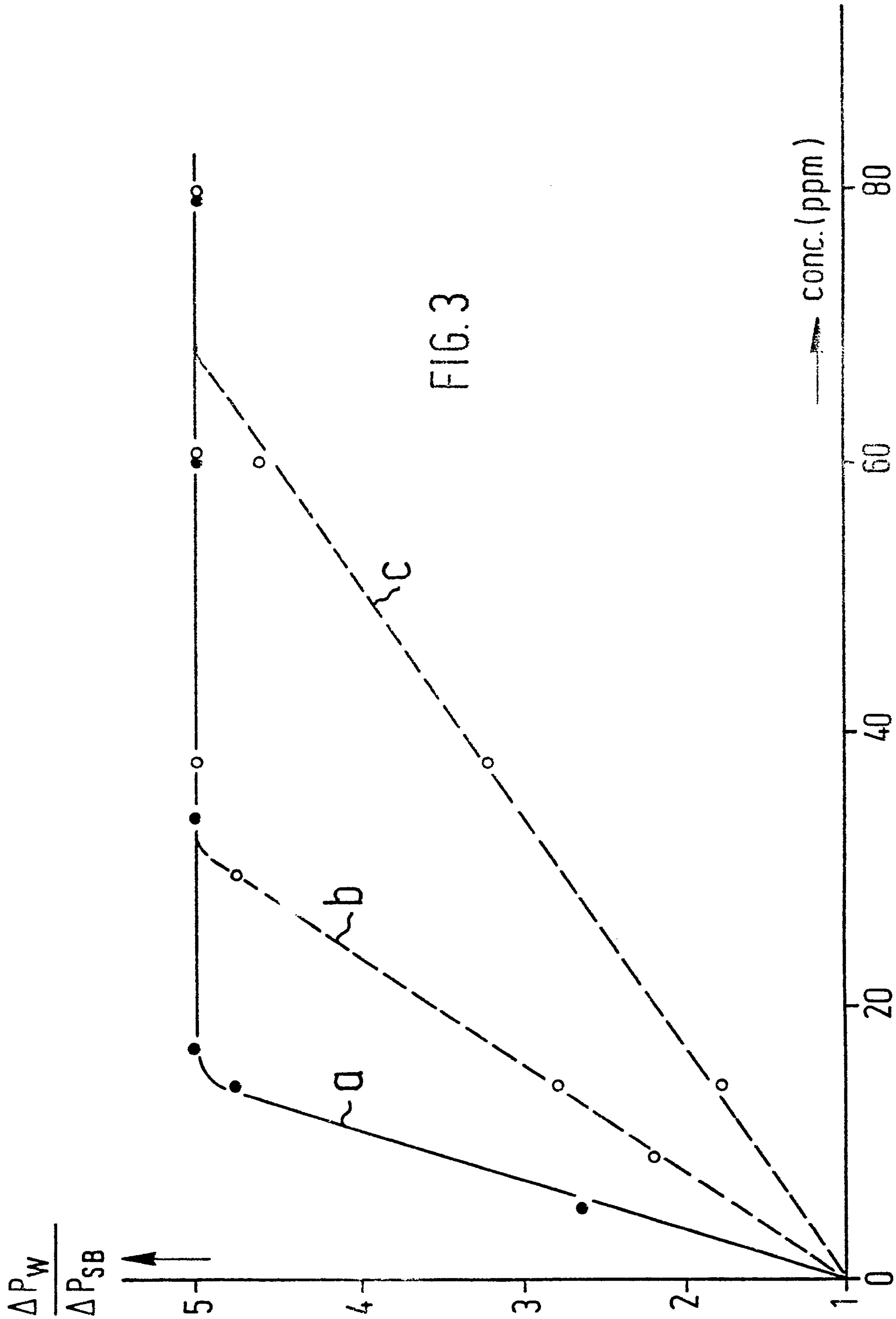


FIG. 3

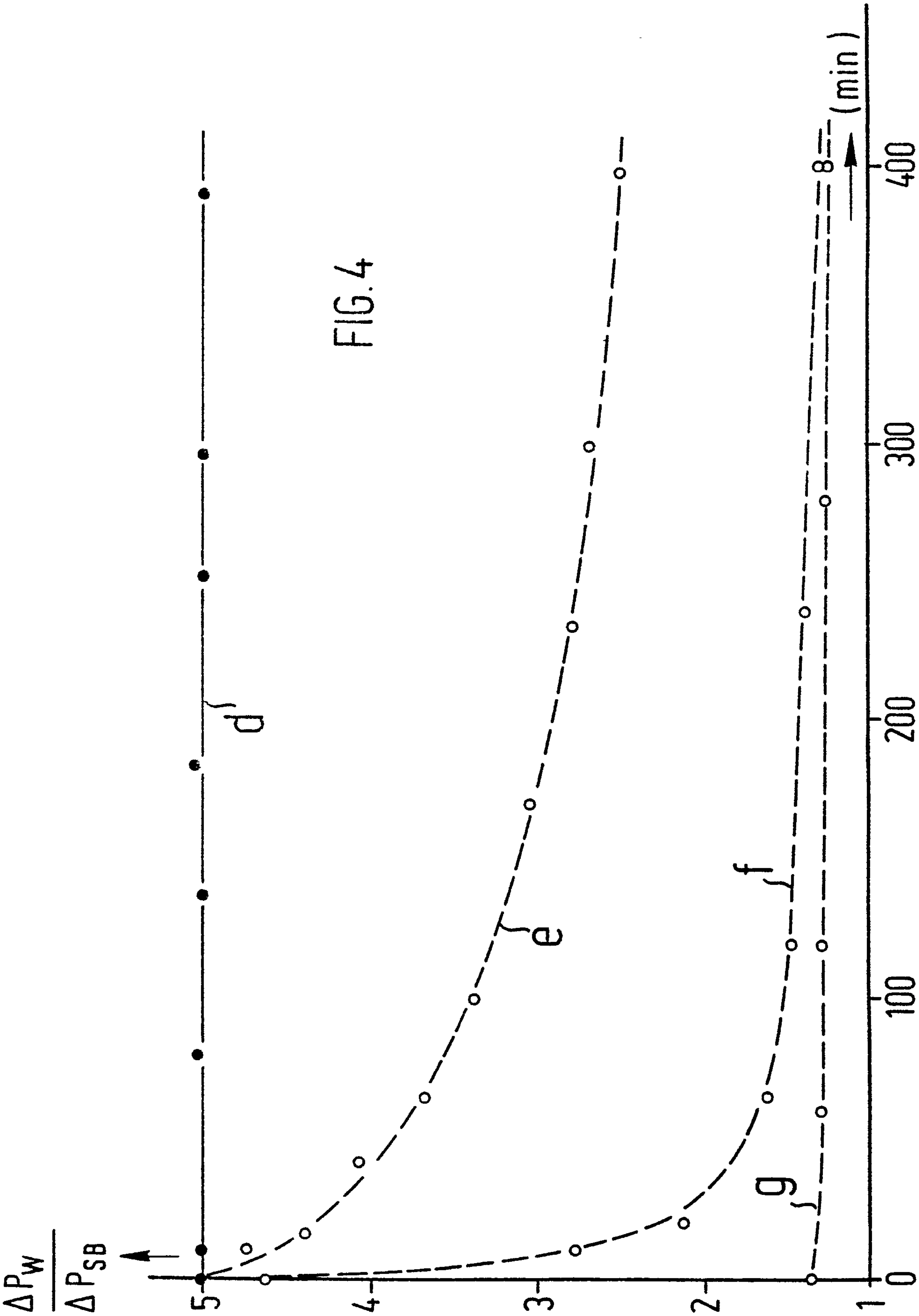


FIG. 4

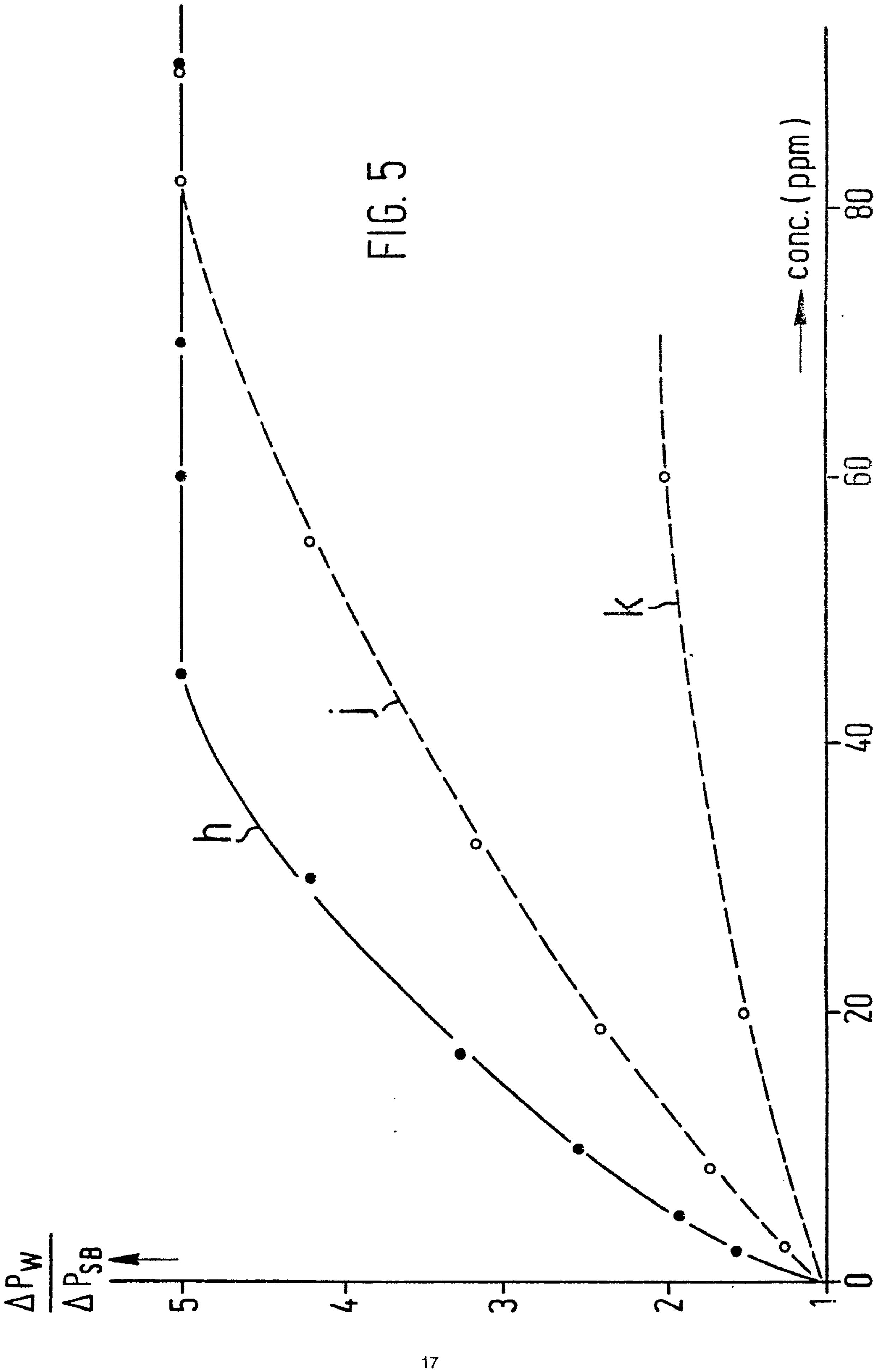


FIG. 5